# EUROPÄISCHE PATENTANMELDUNG

(11) **EP 3 745 515 A1**
(43) Veröffentlichungstag der Anmeldung: **02.12.2020**
(21) Anmeldenummer: 20174893.6
(22) Anmeldetag: 15.05.2020
(51) Int. Cl.: H01M 8/04029, H01M 8/04089, H01M 8/0432, H01M 8/04746, H01M 8/04082, H01M 8/1018

(54) **BRENNSTOFFZELLENANORDNUNG UND SCHIENENFAHRZEUG MIT EINER BRENNSTOFFZELLENANORDNUNG**

(30) Priorität: 31.05.2019 DE 102019207997
(71) Anmelder: Siemens Mobility GmbH, 81739 München (DE)
(72) Erfinder: Peymandar, De-Niang Maria, 91468 Gutenstetten (DE); Ruckes, Jonas, 91058 Erlangen (DE)

(57) **Zusammenfassung**

Es wird eine Brennstoffzellenanordnung (1) mit zumindest einer Brennstoffzelle (2) und einer Zuleitung (4) für einen Brennstoff (20) zur Brennstoffzelle angegeben, wobei der Zuleitung ein Wärmetauscher (3) zur Temperierung des Brennstoffs zugeordnet ist.

Weiterhin wird ein Schienenfahrzeug (9) mit einer Brennstoffzellenanordnung angegeben.

## Beschreibung

Die vorliegende Erfindung betrifft eine Brennstoffzellenanordnung und ein Schienenfahrzeug mit einer Brennstoffzellenanordnung.

Für den Betrieb einer Brennstoffzelle in einem Schienenfahrzeug bestehen hohe Anforderungen an die Lebensdauer der Brennstoffzelle. Beispielsweise können Schädigungen an der Membran der Brennstoffzelle zu einem vorzeitigen Ausfall führen.

Eine Aufgabe ist es, eine Brennstoffzellenanordnung anzugeben, mit der auf einfache und effiziente Weise eine hohe Lebensdauer erzielbar ist.

Diese Aufgabe wird unter anderem durch eine Brennstoffzellenanordnung gemäß Patentanspruch 1 gelöst. Weitere Ausgestaltungen und Zweckmäßigkeiten sind Gegenstand der abhängigen Patentansprüche. Nachfolgend im Zusammenhang mit zumindest einer Ausführungsform der Brennstoffzellenanordnung beschriebene Merkmale sind mit anderen im Zusammenhang mit einer Brennstoffzellenanordnung beschriebenen Merkmale kombinierbar, solange sich diese nicht gegenseitig ausschließen.

Gemäß zumindest einer Ausführungsform der Brennstoffzellenanordnung weist die Brennstoffzellenanordnung zumindest eine Brennstoffzelle und eine Zuleitung für einen Brennstoff zur Brennstoffzelle auf. Der Zuleitung ist ein Wärmetauscher zur Temperierung des Brennstoffs zugeordnet.

Der Wärmetauscher befindet sich insbesondere in einem Strömungspfad des Brennstoffs zur Brennstoffzelle. Es erfolgt also ein Wärmeaustausch, bevor der Brennstoff in die Brennstoffzelle eintritt. Beispielsweise befindet sich der Wärmtauscher in einem Strömungspfad zwischen einem Tank für den Brennstoff und der Brennstoffzelle. Mittels des Wärmetauschers kann auf einfache Weise erzielt werden, dass der in die Brennstoffzelle einströmende Brennstoff innerhalb eines vorgegebenen Einlasstemperaturbereichs der Brennstoffzelle liegt. Insbesondere kann der Einlasstemperaturbereich auch bei extremen Außentemperaturen eingehalten werden, so dass die gewünschte Leistung der Brennstoffzelle zuverlässig erreicht werden kann.

Der Begriff "Brennstoffzelle" bezeichnet allgemein eine Vorrichtung, in der durch eine elektrochemische Reaktion, die auch als "kalte Verbrennung" bezeichnet wird, elektrische Energie entsteht.

"Temperieren" bedeutet, dass der Brennstoff beim Durchströmen des Wärmetauschers eine Temperatur in einem vorgegebenen Temperaturbereich annimmt.

Beispielsweise liegt die Temperatur des Brennstoffs beim Einströmen in den Wärmetauscher in einem ersten Betriebsstadium der Brennstoffzellenanordnung über dem vorgegebenen Temperaturbereich. Der Wärmetauscher kühlt in diesem Fall den Brennstoff. Es hat sich gezeigt, dass eine Kühlung mit einem Wärmetauscher mit einer nur geringen Erhöhung der Masse der Brennstoffzellenanordnung erzielbar ist, insbesondere im Vergleich zu einer rein passiven Kühlung durch Erhöhung der Oberfläche. Eine möglichst niedrige Masse der Brennstoffzellenanordnung ist besonders für mobile Anwendungen günstig, da die zu bewegende Masse verringert wird.

Besonders hohe Temperaturen erreicht der Brennstoff typischerweise direkt nach dem Füllen des Tanks. Beispielsweise werden beim Befüllen mit Wasserstoff Temperaturen von bis zu 80 °C und nach der Entspannung aufgrund des negativen Joule-Thomson-Koeffizienten von Wasserstoff von bis zu 100 °C erreicht. Eine Einleitung eines derart heißen Brennstoffs könnte zur Schädigung der Brennstoffzelle führen.

Weiterhin liegt die Temperatur des Brennstoffs beispielsweise beim Einströmen in den Wärmetauscher in einem zweiten Betriebsstadium der Brennstoffzellenanordnung unter dem vorgegebenen Temperaturbereich. Der Wärmetauscher erwärmt in diesem Fall den Brennstoff. Es hat sich gezeigt, dass eine Erwärmung über den Wärmetauscher effizienter ist als beispielsweise durch eine elektrische Rohrmantelheizung, da hierfür elektrische Energie verbraucht würde, welche typischerweise zuvor in der Brennstoffzelle erzeugt werden müsste.

Gemäß zumindest einer Ausführungsform der Brennstoffzellenanordnung ist der Wärmetauscher dazu eingerichtet, den Brennstoff in einem ersten Betriebsstadium der Brennstoffzellenanordnung zu kühlen und in einem zweiten Betriebsstadium der Brennstoffzellenanordnung zu erwärmen. Im Unterschied hierzu dient ein Wärmetauscher in einem reinen Kühlreislauf lediglich der Vermeidung einer Temperaturerhöhung der zu kühlenden Komponente über eine bestimmte Maximaltemperatur.

Abhängig vom jeweiligen Betriebszustand und der daraus resultierenden Temperatur des Brennstoffs kann der Wärmetauscher also den Brennstoff so temperieren, dass seine Temperatur innerhalb des vorgegebenen Temperaturbereichs liegt.

Gemäß zumindest einer Ausführungsform der Brennstoffzellenanordnung ist die Brennstoffzelle eine Wasserstoff-Brennstoffzelle. Derartige Brennstoffzellen können bei vergleichsweise niedrigen Betriebstemperaturen betrieben werden, insbesondere bei Betriebstemperaturen unter 100° C..

Beispielsweise ist die Brennstoffzelle eine Protonenaustauschmembran (Proton Exchange Membrane Fuel Cell, PEMFC)-Brennstoffzelle. Es kann aber auch ein anderer Brennstoffzellentyp Anwendung finden.

Gemäß zumindest einer Ausführungsform der Brennstoffzellenanordnung ist der Wärmetauscher einem Kreislauf zugeordnet, welcher zumindest eine weitere Komponente temperiert. Die weitere Komponente ist beispielsweise ein Teil der Brennstoffzellenanordnung, etwa ein Brennstoffzellenverdichter. Alternativ ist die weitere Komponente eine Komponente außerhalb der Brennstoffzellenanordnung, beispielsweise eine Komponente eines Schienenfahrzeugs mit einer solchen Brennstoffzellenanordnung, etwa ein Motor oder eine Leistungselektronik. Beispielsweise befinden zwei oder mehr als zwei weitere Komponenten im Kreislauf Vorzugsweise ist der Wärmetauscher in einen Kreislauf integriert, welcher für die Temperierung der weiteren Komponente beziehungsweise der weiteren Komponenten ohnehin vorhanden ist. Es hat sich gezeigt, dass dadurch eine Temperierung des Brennstoffs erzielt werden kann, ohne dass sich der Bedarf an elektrischer Energie wesentlich erhöht. Ein geringer erhöhter Energiebedarf entsteht lediglich aufgrund der zusätzlichen Rohrleitung im Kreislauf zum Wärmetauscher und den damit verbundenen Druckverlusten im Kreislauf. Eine signifikante Änderung an dem Aufbau des Kreislaufs ist hierfür nicht erforderlich, insbesondere wenn der Kreislauf bereits eine Komponente der Brennstoffzellenanordnung temperiert.

Der Wärmetauscher ist insbesondere dazu eingerichtet, von einem Medium durchflossen zu werden. Als Medium eignen sich gängige Flüssigkeiten für Kühlkreisläufe.

Beispielsweise ist der Wärmetauscher ein Rohrwärmetauscher oder ein Plattenwärmetauscher. Mit solchen Geometrien kann ein effizienter Wärmeaustausch einfach und zuverlässig erzielt werden. Grundsätzlich eignen sich jedoch auch andere Geometrien von Wärmetauschern.

Gemäß zumindest einer Ausführungsform der Brennstoffzellenanordnung weist das Medium im Betrieb der Brennstoffzellenanordnung eine Vorlauftemperatur auf, die innerhalb eines vorgegebenen Einlasstemperaturbereichs der Brennstoffzelle liegt. Abhängig vom Betriebszustand der Brennstoffzellenanordnung kann das Medium den Brennstoff so besonders zuverlässig temperieren, insbesondere kühlen oder erwärmen. Beispielsweise nimmt der Brennstoff beim Durchgang durch den Wärmetauscher die Vorlauftemperatur an.

Gemäß zumindest einer Ausführungsform der Brennstoffzellenanordnung beträgt die Vorlauftemperatur zwischen einschließlich 20 °C und einschließlich 50 °C, insbesondere zwischen einschließlich 30 °C und einschließlich 45 °C. Es hat sich gezeigt, dass mit einer derartigen Vorlauftemperatur erzielt werden kann, dass der Brennstoff beim Durchlaufen des Wärmetauschers eine Temperatur innerhalb des vorgegebenen Einlasstemperaturbereichs der Brennstoffzelle erreicht, insbesondere im gesamten im Betrieb auftretenden Temperaturbereich des Brennstoffs vor dem Durchlaufen des Wärmetauschers, etwa zwischen -25 °C und +100 °C.

Gemäß zumindest einer Ausführungsform der Brennstoffzellenanordnung ist eine Durchflussmenge des Mediums durch den Wärmetauscher mittels eines Ventils einstellbar. Der Wärmeübertrag zwischen dem Medium und dem Brennstoff ist im Betrieb der Brennstoffzellenanordnung an die jeweiligen Anforderungen anpassbar.

Beispielsweise ist das Ventil ein Bypassventil. Mittels des Bypassventils kann ein einstellbarer Strömungspfad für das Medium unter Umgehung des Wärmetauschers bereitgestellt werden. Durch zumindest teilweises Öffnen des Bypassventils kann die Durchflussmenge durch den Wärmetauscher reduziert werden, ohne die Durchflussmenge durch den übrigen Kreislauf zu verringern.

Gemäß zumindest einer Ausführungsform der Brennstoffzellenanordnung ist dem Wärmetauscher im Strömungspfad des Brennstoffs gesehen ein Eingangstemperatursensor vorgeordnet. Beispielsweise befindet sich der Eingangstemperatursensor im Strömungspfad zwischen dem Tank und dem Wärmetauscher. Das Signal des Eingangstemperatursensors findet beispielsweise zur Steuerung des Ventils Anwendung.

Gemäß zumindest einer Ausführungsform der Brennstoffzellenanordnung weist die Zuleitung zwischen dem Wärmetauscher und der Brennstoffzelle einen Ausgangstemperatursensor auf. Anhand des Ausgangstemperatursensors kann überwacht werden, ob der Brennstoff nach Durchlaufen des Wärmetauschers eine Temperatur innerhalb des vorgegebenen Einlasstemperaturbereichs der Brennstoffzelle aufweist.

Die beschriebene Brennstoffzellenanordnung eignet sich besonders für den mobilen oder stationären Betrieb im Freien. Insbesondere eignet sich die Brennstoffzellenanordnung für die Verwendung in einem Schienenfahrzeug, beispielsweise einem Triebwagen.

Gemäß zumindest einer Ausführungsform weist ein Schienenfahrzeug eine Brennstoffzellenanordnung mit zumindest einem der obigen Merkmale auf. Die Wettbewerbsfähigkeit eines Schienenfahrzeugs wird mit einer solchen Brennstoffzellenanordnung erhöht.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert, wobei
Figur 1 ein Ausführungsbeispiel für eine Brennstoffzellenanordnung zeigt;
Figur 2 ein Ausführungsbeispiel für einen Wärmetauscher zeigt; und
Figur 3 ein Ausführungsbeispiel für ein Schienenfahrzeug zeigt.

Die Figuren sind jeweils schematische Darstellungen und daher nicht maßstabsgetreu. Insbesondere können verschiedene Elemente zur verbesserten Darstellung oder zum verbesserten Verständnis übertrieben groß dargestellt sein.

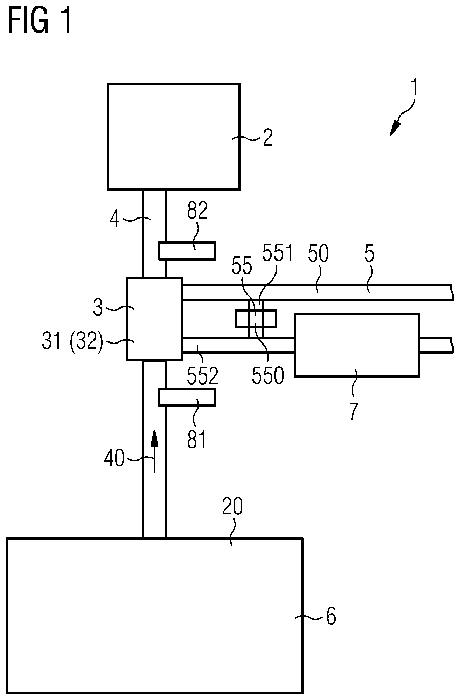

In Figur 1 ist eine Brennstoffzellenanordnung 1 mit einer Brennstoffzelle 2 und einer Zuleitung 4 für einen Brennstoff 20 zur Brennstoffzelle 2 dargestellt. Der Zuleitung 4 ist ein Wärmetauscher 3 zur Temperierung des Brennstoffs 20 zugeordnet. In einem Strömungspfad, dargestellt durch einen Pfeil 40, zwischen einem Tank 6 und der Brennstoffzelle 2 befindet sich der Wärmetauscher 3.

Zur vereinfachten Darstellung ist lediglich eine Brennstoffzelle 2 gezeigt. Die Brennstoffzellenanordnung 1 kann jedoch mehrere Brennstoffzellen aufweisen.

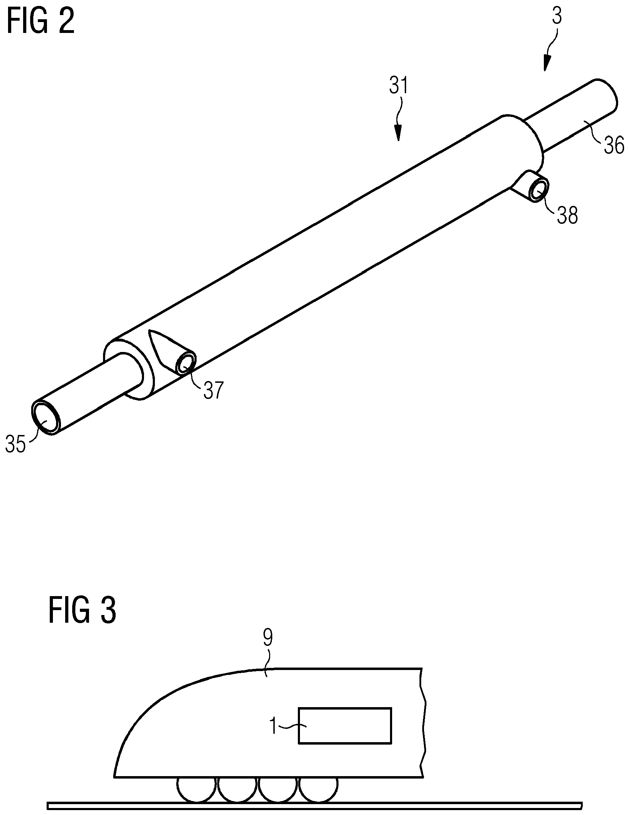

Der Wärmetauscher 3, beispielsweise ein Rohrwärmetauscher 31 oder ein Plattenwärmetauscher 32, befindet sich in einem Kreislauf 5 für ein Medium 50. Ein besonders geeigneter Wärmetauscher wird im Zusammenhang mit Figur 2 beschrieben.

Dem Kreislauf 5 ist eine weitere Komponente 7 zugeordnet, welche mittels des Mediums 50 temperiert, insbesondere gekühlt wird. Vorzugsweise befindet sich der Wärmetauscher 3 in einem Kreislauf 5, welcher für die Kühlung der weiteren Komponente 7 ohnehin erforderlich ist. Dadurch reduziert sich der technische Aufwand für die Temperierung des Brennstoffs 20 mittels des Wärmetauschers 3.

Die weitere Komponente 7 ist beispielsweise ein Teil der Brennstoffanordnung 1, etwa ein Brennstoffzellenverdichter. Alternativ oder zusätzlich ist der Kreislauf 5 zur Kühlung einer weiteren Komponente 7 außerhalb der Brennstoffzellenanordnung eingerichtet, beispielsweise zur Kühlung eines Gleichspannungswandlers einer Batterie, einer Leistungselektronik oder eines Motors.

Eine Durchflussmenge des Mediums 50 durch den Wärmetauscher 3 ist in dem gezeigten Ausführungsbeispiel mittels eines Ventils 55, exemplarisch mittels eines Bypassventils 550 einstellbar. In dem gezeigten Ausführungsbeispiel weist der Kreislauf einen Überbrückungspfad 551 parallel zum Wärmetauscher auf. Das Medium kann also entlang eines Wärmetauscherpfads 552 durch den Wärmetauscher strömen oder diesen über den Überbrückungspfad 551 umgehen. Das Ventil 55 befindet sich im Überbrückungspfad 551 oder im Wärmetauscherpfad 552. Der Grad der Wärmeübertragung zwischen dem Medium 50 und dem Brennstoff 20 im Wärmetauscher 3 ist so im Betrieb der Brennstoffzellenanordnung 1 einfach an die bestehenden Betriebsbedingungen anpassbar. Mit einem Bypassventil kann die Durchflussmenge angepasst werden, ohne in den übrigen Kreislauf signifikant einzugreifen. Die Integration des Wärmetauschers 3 in einen bestehenden Kreislauf wird vereinfacht. Die Anordnung des Wärmetauschers 3 im Kreislauf 5 kann in weiten Grenzen variiert werden. Beispielsweise sind der Wärmetauscher 3 und die weitere Komponente 7 seriell zueinander im Kreislauf 5 angeordnet, etwa durch Weglassen des Überbrückungspfads 551. Alternativ sind der Wärmetauscher 3 und die weitere Komponente 7 zum Beispiel parallel zueinander im Kreislauf 5 angeordnet.

Auf das Ventil 55 kann zur Verringerung der Komplexität des Aufbaus auch verzichtet werden.

Weiterhin ist dem Wärmetauscher 3 entlang des Strömungspfads 40 gesehen ein Eingangstemperatursensor 81 vorgeordnet und ein Ausgangstemperatursensor 82 nachgeordnet. Mittels dieser Sensoren kann sichergestellt werden, dass der Brennstoff 20 nach Durchlaufen des Wärmetauschers 3 eine Temperatur innerhalb eines vorgegebenen Einlasstemperaturbereichs der Brennstoffzelle 2 aufweist. Beispielsweise dienen die Signale des Eingangstemperatursensors 81 und/oder des Ausgangstemperatursensors 82 der Regelung des Ventils 55. Zur Verringerung der Komplexität des Aufbaus kann jedoch auch auf einen oder auch auf beide Temperatursensoren verzichtet werden.

Beispielsweise ist die Brennstoffzelle 2 eine Wasserstoff-Brennstoffzelle, etwa in Form einer PEMFC-Brennstoffzelle. Derartige Brennstoffzellen können im Vergleich zu anderen Brennstoffzellentypen bei vergleichsweise niedrigen Betriebstemperaturen betrieben werden, insbesondere bei Temperaturen unter 100 °C, beispielsweise bei 70°C.

Beispielsweise ist der vorgegebene Einlasstemperaturbereich der Brennstoffzelle 2 zwischen einschließlich -10 °C und einschließlich +50 °C.

Eine Temperierung des Brennstoffs 20 ist für Wasserstoff-Brennstoffzellen daher besonders günstig. Grundsätzlich kann für die beschriebene Brennstoffzellenanordnung jedoch auch ein anderer Brennstoff Anwendung finden.

Die Vorlauftemperatur des Mediums 50 liegt zweckmäßigerweise innerhalb des vorgegebenen Einlasstemperaturbereichs der Brennstoffzelle 2, beispielsweise zwischen einschließlich 20 °C und einschließlich 50 °C, insbesondere zwischen einschließlich 30 °C und einschließlich 45 °C. Beim Durchlaufen des Wärmetauschers 3 nimmt der Brennstoff 20 die Vorlauftemperatur zumindest näherungsweise an, beispielsweise mit einer Abweichung von höchstens 10 °C oder höchstens 5 °C.

Als Medium 50 eignet sich insbesondere eine Flüssigkeit, beispielsweise Wasser, Öl, Ethanol oder Ester oder eine Mischung mit zumindest einer der genannten Flüssigkeiten.

Im Strömungspfad vor dem Wärmetauscher 3 kann der Brennstoff 20 Temperaturen zwischen einschließlich -25 °C und +100 °C aufweisen. Besonders tiefe Temperaturen werden beispielsweise durch tiefe Außentemperaturen verursacht. Bei Wasserstoff als Brennstoff 20 können sich tiefe Temperaturen beispielsweise ungünstig auswirken, wenn frischer und nicht genutzter Wasserstoff miteinander vermischt und der Brennstoffzelle erneut zugeführt werden. Der nicht genutzte Wasserstoff hat die Brennstoffzelle bereits durchströmt, ist dabei warm geworden und hat Wasserdampf aufgenommen. Wenn dieser warme, feuchte Wasserstoff mit sehr kaltem, trockenem Wasserstoff vermischt wird, besteht die Gefahr, dass der Wasserdampf auskristallisiert und die Membran der Brennstoffzelle 2 beschädigt. Dies wird mittels des Wärmetauschers 3 unterbunden, so dass die Lebensdauer der Brennstoffzelle 2 und damit der gesamten Brennstoffzellenanordnung 1 erhöht wird.

Andererseits könnte auch zu heißer Wasserstoff, beispielsweise mit einer Temperatur von 80°C oder mehr, zu einer Schädigung der Brennstoffzelle 2 führen, wenn er nicht mittels des Wärmetauschers 3 temperiert würde.

In der beschriebenen Brennstoffzellenanordnung 1 wird also der Brennstoff 20 abhängig von dem aktuellen Betriebsstadium der Brennstoffzellenanordnung 1 und seiner damit einhergehenden Temperatur entweder gekühlt oder erwärmt, bevor er der Brennstoffzelle 2 zugeführt wird.

Es hat sich gezeigt, dass eine aktive Kühlung mittels eines Wärmetauschers 3 insgesamt mit einer geringeren Gesamtmasse der Brennstoffzellenanordnung erzielbar ist als eine passive Kühlung durch eine reine Oberflächenvergrößerung.

Zusätzlich kann die Erwärmung des Brennstoffs 20 über den Wärmetauscher 3 erzielt werden, ohne dass hierfür elektrische Energie verbraucht werden muss.

Von dem beschriebenen Ausführungsbeispiel abweichend kann der Brennstoff 20 und/oder der Wärmetauscher 3 auch in thermischer Wechselwirkung mit zwei oder mehr verschiedenen Kreisläufen stehen.

Mit der beschriebenen Temperierung des Brennstoffs 20 vor dem Eintritt in die Brennstoffzelle 2 eignet sich die Brennstoffzellenanordnung besonders für den Betrieb im Freien, sowohl für stationäre als auch für mobile Anwendungen, beispielsweise in einem Fahrzeug.

Ein Ausführungsbeispiel für einen Wärmetauscher ist in Figur 2 gezeigt. Der Wärmetauscher 3 weist einen Brennstoff-Einlass 35 und einen Brennstoff-Auslass 36 auf. Zwischen dem Brennstoff-Einlass 35 und dem Brennstoff-Auslass 36 befindet sich ein Rohr, welches im Betrieb des Wärmetauschers von einem Medium umströmt wird. Hierfür weist der Wärmetauscher 3 einen Medium-Einlass 37 und einen Medium-Auslass 38 auf. Der Wärmetauscher 3 hat in diesem Ausführungsbeispiel also eine "Rohr im Rohr"-Geometrie. Grundsätzlich kann die Geometrie des Wärmetauschers 3 jedoch in weiten Grenzen variiert werden, solange ein ausreichender Wärmeaustausch zwischen dem Medium und dem Brennstoff erfolgt.

In Figur 3 ist ein Ausführungsbeispiel für ein Schienenfahrzeug 9 mit einer beschriebenen Brennstoffzellenanordnung 1 gezeigt. Beispielsweise ist das Schienenfahrzeug 9 ein Zug oder ein Teil eines Zugs, beispielsweise ein Triebwagen. Beispielsweise handelt es sich um ein Schienenfahrzeug in der Temperaturklasse T1 gemäß EN 50125, also um ein Schienenfahrzeug, das in einem Temperaturbereich zwischen -25°C und 40°C einsetzbar ist. Auch bei der minimalen Temperatur von -25°C wird die Gefahr einer Schädigung der Brennstoffzelle aufgrund zu niedriger Brennstofftemperaturen mittels des Wärmetauschers 3 effizient und zuverlässig unterbunden.

Beispielsweise weist das Schienenfahrzeug 9 mehrere Kreisläufe auf, etwa für die Klimatisierung, die Traktionskühlung, die Kühlung von Transformatoren, Brennstoffzellen, Batterien oder Leistungselektronik. Die Kreisläufe befinden sich beispielsweise auf unterschiedlichen Temperatur-Niveaus und nutzen beispielsweise unterschiedliche Medien.

Ein besonders einfacher und kostengünstiger Aufbau der Brennstoffzellenanordnung 1 wird insbesondere erzielt, wenn der Brennstoff 20 mit nur einem Kreislauf des Schienenfahrzeugs wechselwirkt und dieser, vorzugsweise ohnehin im Schienenfahrzeug vorhandene, Kreislauf eine Vorlauftemperatur innerhalb des vorgegebenen Einlasstemperaturbereichs der Brennstoffzelle 2 aufweist. Die Temperierung des Brennstoffs und damit einhergehende Verbesserung der Lebensdauer der Brennstoffzelle wird zuverlässig erreicht, ohne Gewicht, Energieverbrauch und Komplexität der Brennstoffzellenanordnung signifikant zu erhöhen.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: Brennstoffzellenanordnung
- 2: Brennstoffzelle
- 3: Wärmetauscher
- 31: Rohr-Wärmetauscher
- 32: Platten-Wärmetauscher
- 35: Brennstoff-Einlass
- 36: Brennstoff-Auslass
- 37: Medium-Einlass
- 38: Medium-Auslass
- 4: Zuleitung
- 40: Strömungspfad
- 5: Kreislauf
- 50: Medium
- 55: Ventil
- 550: Bypassventil
- 551: Überbrückungspfad
- 552: Wärmetauscherpfad
- 6: Tank
- 7: weitere Komponente
- 81: Eingangstemperatursensor
- 82: Ausgangstemperatursensor
- 9: Schienenfahrzeug

## Patentansprüche

1. Brennstoffzellenanordnung (1) mit
- zumindest einer Brennstoffzelle (2); und
- einer Zuleitung (4) für einen Brennstoff (20) zur Brennstoffzelle;
wobei der Zuleitung ein Wärmetauscher (3) zur Temperierung des Brennstoffs zugeordnet ist.

2. Brennstoffzellenanordnung nach Anspruch 1,
wobei die Brennstoffzelle eine Wasserstoff-Brennstoffzelle ist.

3. Brennstoffzellenanordnung nach Anspruch 1 oder 2,
wobei der Wärmetauscher einem Kreislauf (5) zugeordnet ist, welcher zumindest eine weitere Komponente (7) temperiert.

4. Brennstoffzellenanordnung nach einem der vorherigen Ansprüche,
wobei der Wärmetauscher dazu eingerichtet ist, den Brennstoff in einem ersten Betriebsstadium der Brennstoffzellenanordnung zu kühlen und in einem zweiten Betriebsstadium der Brennstoffzellenanordnung zu erwärmen.

5. Brennstoffzellenanordnung nach einem der vorherigen Ansprüche,
wobei der Wärmetauscher ein Rohrwärmetauscher (31) oder ein Plattenwärmetauscher (32) ist.

6. Brennstoffzellenanordnung nach einem der vorherigen Ansprüche,
wobei der Wärmetauscher dazu eingerichtet ist, von einem Medium (50) durchflossen zu werden.

7. Brennstoffzellenanordnung nach Anspruch 6,
wobei das Medium im Betrieb der Brennstoffzellenanordnung eine Vorlauftemperatur aufweist, die innerhalb eines vorgegebenen Einlasstemperaturbereichs der Brennstoffzelle liegt.

8. Brennstoffzellenanordnung nach Anspruch 7,
wobei die Vorlauftemperatur zwischen einschließlich 20°C und einschließlich 50°C beträgt.

9. Brennstoffzellenanordnung nach einem der Ansprüche 6 bis 8,
wobei eine Durchflussmenge des Mediums durch den Wärmetauscher mittels eines Ventils (55) einstellbar ist.

10. Brennstoffzellenanordnung nach Anspruch 9,
wobei das Ventil ein Bypassventil (550) ist.

11. Brennstoffzellenanordnung nach einem der vorherigen Ansprüche,
wobei dem Wärmetauscher in einem Strömungspfad (40) des Brennstoffs gesehen ein Eingangstemperatursensor (81) vorgeordnet ist.

12. Brennstoffzellenanordnung nach einem der vorherigen Ansprüche,
wobei die Zuleitung zwischen dem Wärmetauscher und der Brennstoffzelle einen Ausgangstemperatursensor (82) aufweist.

13. Schienenfahrzeug (9) mit einer Brennstoffzellenanordnung nach einem der vorherigen Ansprüche.
